# EUROPEAN PATENT APPLICATION

(11) **EP 1 689 167 A1**
(43) Date of publication of application: **09.08.2006**
(21) Application number: 05002393.6
(22) Date of filing: 04.02.2005
(51) Int. Cl.: H04N 5/232

(54) **A system and method for providing image data, a software product and an electronic device**

(71) Applicant: SIEMENS AKTIENGESELLSCHAFT, 80333 München (DE)
(72) Inventor: Jorra, Stephan, 16548 Glienicke (DE)

(57) **Abstract**

A method for providing image data; comprises the steps of:
- i) receiving a message (a203) from a mobile network (100), the message (a203) comprising an identifier;
- ii) verifying said identifier, and if the identifier is allowable:
   o operating a digital camera (115) for obtaining a digital image (a207); and
   o generating a message (a209) comprising said digital image (a207) and the identifier or any identifier derived thereof; and
- iii) transmitting the generated message (a209) to the mobile network (100).

## Description

### Field of the invention

The invention relates to methods and systems for providing image data, especially to transmitting it into a mobile network. Furthermore, the invention relates to software products and electronic devices suitable for the same purpose.

### Background art

Many different solutions for providing image data to a remote location exist. Maybe one of the most common solutions is a webcam that can be used to provide image data to data terminals over the Internet.

A problem is that a webcam requires access to the Internet which in many cases is either costly or rather unpractical to construct. In addition to this, to view image data provided by a webcam requires in most cases Internet access which, despite the rapid growth of so called hot spots and wireless local area networks, is still not commonplace for users outside their home or working place.

### Summary of the invention

If, instead of or in addition to using a webcam and the Internet, image data is provided over a mobile network in the manner as set out in method claim 8 the drawback of needing a connection to the Internet can be overcome. Both system of claim 1 and an electronic device of claim 14 are suitable for this purpose too. A software product according to claim 13 may be used to accomplish the goal when an appropriate device is available.

The dependent claims describe various advantageous embodiments of the invention.

### Advantages of the invention

By operating a digital camera for obtaining a digital image, if a comparison shows that an identifier received in a message from a mobile network is allowable, and then generating a message comprising said digital image and the identifier or any identifier derived thereof, the digital camera may be triggered remotely. When the message generated is transmitted to the mobile network, it enables the mobile network to forward the image data comprised in the message to the terminal identified by the identifier.

If the digital camera is operated with a predefined resolution, this may take into account that image data is transmitted to the mobile network.

If the predefined resolution is lower than would be if the digital camera were locally triggered, the amount of data to be transmitted over the mobile network will be lower thus saving transmission time or costs.

If the predefined resolution is higher than would be if the digital camera were locally triggered, the digital camera may be used for obtaining more images than would be the case if these images were locally stored with the same resolution, since a theoretically infinite storage capacity will be available over the mobile network.

### List of Figures

In the following, the invention is described in more detail with reference to examples shown in the Figures of accompanying drawings, of which:
Figure 1 shows a mobile network, a mobile terminal, and an electronic device for providing image data; and
Figure 2 illustrates signalling between a mobile terminal and an electronic device for providing image data.

Same reference numerals refer to similar structural elements in both Figures.

### Detailed description

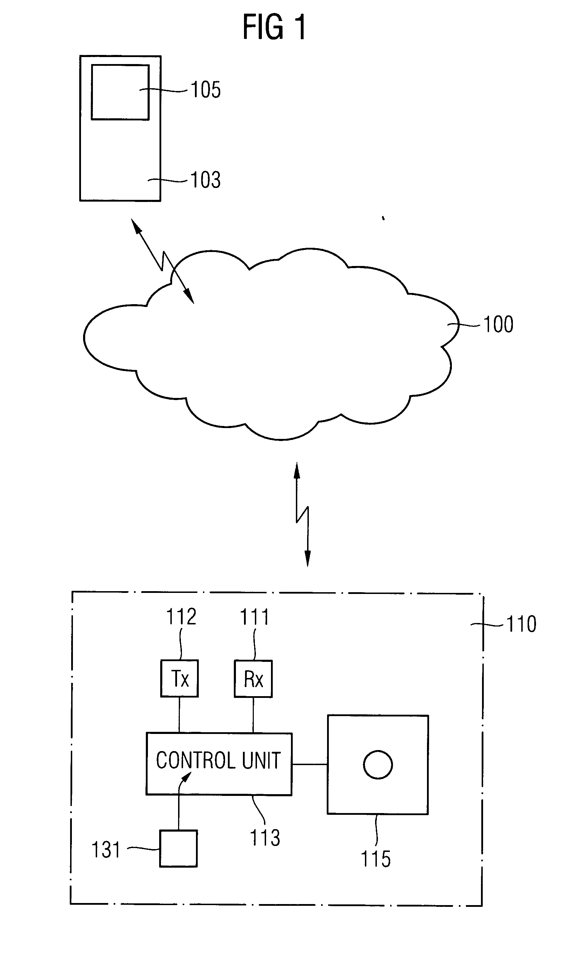

As shown in Figure 1, a mobile network 100, especially a GSM, GPRS, or UMTS capable cellular network, can communicate with a plurality of mobile terminals 103. Usually, a mobile terminal 103 comprises a display 105. Thanks to the recent development in electronics, now on the market there are plenty of mobile terminals with a relatively large display capable of displaying images, preferably in colour.

An electronic device 110 for providing image data, especially a mobile telephone comprising an integrated digital camera, comprises a receiver 111 and a transmitter 112 for communicating with mobile network 100. The receiver 111 is adapted to pass messages received from the mobile network 100 to a control unit 113, especially a processor, and the transmitter 112 is adapted to transmit messages from the control unit 113 to the mobile network 100.

A software product 131 can be loaded into the control unit 113, so that the control unit 113 then executes software code comprised in the software product 131.

The electronic device 110 further comprises a digital camera 115.

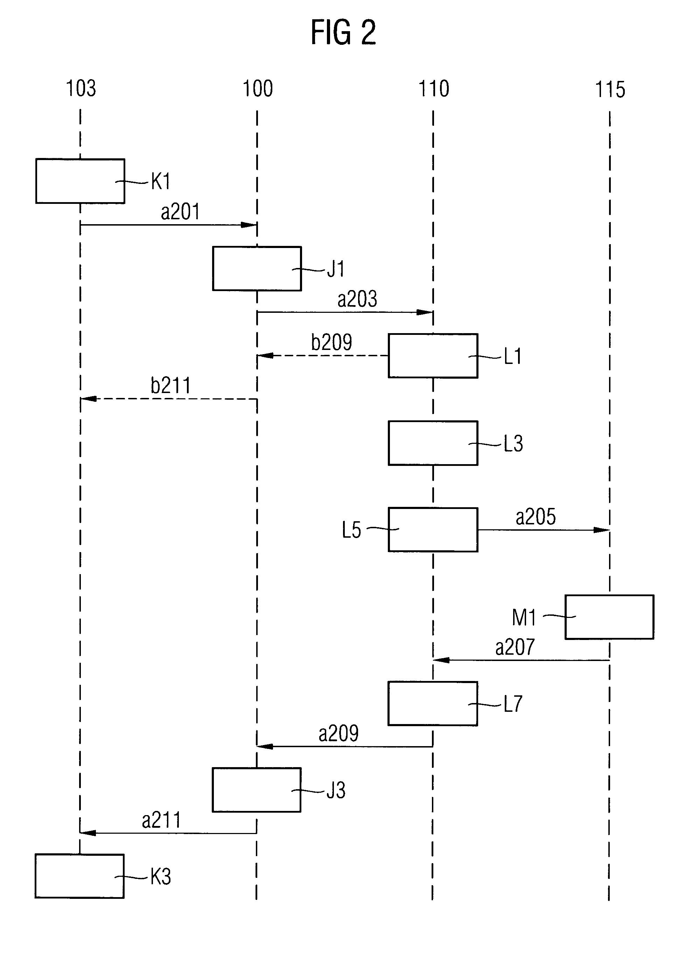

Figure 2 represents a simplified signalling diagram between a mobile terminal 103 and an electronic device 110 for providing image data.

In step K1 the mobile terminal 103 generates message a201 which is then sent by the mobile terminal 103 to the mobile network 100. Most simples kinds for the message a201 are a telephone call or a short message SMS.

The mobile network 100 then receives the message a201, and in step J1 may change some header data of it, add an identifier identifying the mobile terminal 103, or change position of a header field indicating the same. Message a203, which may be either the original message a201 or a new one generated after receiving the message a203, is then passed to the electronic device 110.

Message a203 comprises an identifier that can be used to identify the mobile terminal 103 or a subscription used in the mobile terminal 103. Preferred examples of such an identifier include International Subscriber Digital Number ISDN (known as mobile telephone number) or International Mobile Subscriber Identity IMSI.

In step L1 the electronic device 110 verifies the identifier. The verification may comprise the step of comparing the identifier with identifiers stored in a settings file or in phonebook.

If the verification shows that the identifier is not acceptable, the electronic device 110 may indicate this to the mobile network 100 by transmitting a negative acknowledgement b209. The mobile network 100 may forward the negative acknowledgement in message b211 to the mobile terminal 103.

If the verification shows that the identifier is acceptable, in step L3 which is optional, the electronic device 110 may change the resolution of the digital camera 115. The resolution may be increased or decreased, preferably depending on settings in the settings file. In addition to this or instead of this, in step L3 the mode of operating the digital camera 115 can be selected. The digital camera 115 may be capable of recording digital images either as single images or as a video stream.

In step L5 the digital camera 115 is operated, preferably by the control unit 113 of the electronic device 110 which sends a control message a205 to the digital camera 115.

In step M1 the digital camera 115 obtains a digital image a207. The digital camera 115 passes it to the control unit 113 either as a single image or as a video stream.

In step L7, after a successful recording of the image data, a message a209 comprising in addition to the digital image a207 also the identifier received in message a203 or any identifier derived thereof is generated. This message a209 is then sent to the mobile network 100 which may in step J3 process headers and then forward it as message a211 to the mobile terminal 103. The mobile terminal 103 displays the digital image 207 in step K3.

If the mobile network 100 is a GSM or GPRS network, the Multimedia Messaging Service MMS can be used to carry the digital image a207, i.e. that messages a209 and a211 are MMS messages. If the mobile network 100 is a UMTS network, also other data services requiring a higher transmission rates are possible now because of the broader bandwidth available in the air interface of the network.

In addition or instead of an electronic device 110 a system can also be used. In this manner, the invention can be applied also to simpler mobile radio modules comprising an integrated digital camera. These modules can be installed and used as wireless surveillance cameras. A great benefit of using a mobile network 100 is that it is possible to call up such a system from anywhere in the world.

In a first possible usage scenario, a mobile radio module with an integrated camera is used to monitor a room during the absence of the user of the mobile terminal 103. The firmware running on the mobile radio module needs to configure three kinds of settings: 1) input an authorized calling number for remote triggering and transmitting of data; 2) selection whether single image or video stream is desired; 3) selection of the resolution for a single image, or selection of recording length for video streaming.

When the user has configured all these parameters, he or she can receive the messages a211 comprising image data a207 (single image or video stream) at his mobile terminal 103 simply by sending a message a201, such as that would be sent by placing a telephone call to the electronic device 110, anywhere in the world with suitable mobile network 100 coverage. The only prerequisite is that the mobile terminal 103 used for remote triggering has a suitable data service, such as MMS, available.

Because the radio module uses only the data service of the mobile network 100 and does not need to support voice calls, special SIM cards may be used. At the time of writing, Vodafone® offers a DATA SIM, with which only receiving and transmitting of short messages and data is possible. Due to the current pricing policies of such SIM cards, the monthly fees charged by the operators are rather small, and the charging is based on the volume of the transferred data. Also other providers offer such SIM cards for "Machine to Machine" communication.

In a second possible usage scenario, a the electronic device 110 which is a mobile telephone with an integrated camera 115 is used to monitor an object, such as a domestic animal, during the absence of the user of the mobile terminal 103. The user should do the following:
1) Arrange or set-up the mobile telephone in order to optimally cover the object to be monitored
2) Configure the authorized calling number and resolution.

Consequently, the user can send a call or SMS from anywhere with a mobile telephone 103 that is suitable for reproducing images, and in this manner receive image the digital image 2a207.

Even though the invention has been described by way of some examples, it is clear for the skilled person that the invention is not limited to these but can be modified within the scope of the patent claims.

## Claims

1. A system for providing image data; comprising:
- a digital camera (115);
- control unit (113) for operating the digital camera (115);
- a receiver (111) for receiving data from a mobile network (100);
- a transmitter (112) for transmitting data to the mobile network (100);
**characterized in that**:
the control unit (113) is adapted to:
- i) receive a message (a203) received by the receiver (111) from the mobile network (100), or a message derived thereof, the message (a203) comprising an identifier;
- ii) to verify said identifier, and if the identifier is allowable:
o to operate the digital camera (115) for obtaining a digital image (a207); and
o to generate a message (a209) comprising said digital image (a207) and the identifier or any identifier derived thereof; and
the transmitter (112) is adapted to send the generated message (a209) to the mobile network (100).

2. A system according to claim 1 or 2, wherein: the control unit (113) is adapted to set the resolution of the digital camera (115) to a predefined value.

3. A system according to claim 2, wherein: said predefined value reduces the resolution of the digital image (a207) from a default value.

4. A system according to claim 2, wherein: said predefined value increases the resolution of the digital image (a207) from a default value.

5. A system according to any one of the preceding claims, wherein: the digital image (a207) is a digital still image.

6. A system according to any one of the preceding claims, wherein: the digital image (a207) comprises video stream data.

7. A system according to any one of the preceding claims, wherein: the system is a mobile terminal comprising an integrated digital camera.

8. A method for providing image data; comprising the steps of:
- i) receiving a message (a203) from a mobile network (100), the message (a203) comprising an identifier;
- ii) verifying said identifier, and if the identifier is allowable:
o operating a digital camera (115) for obtaining a digital image (a207); and
o generating a message (a209) comprising said digital image (a207) and the identifier or any identifier derived thereof; and
- iii) transmitting the generated message (a209) to the mobile network (100).

9. A method according to claim 8, wherein: the digital camera (115) is operated with a predefined resolution.

10. A method according to claim 8 or 9, wherein: the resolution with which the digital image (a207) is recorded is reduced or increased from current resolution.

11. A method according to any one of the preceding claims 8 to 10, wherein: the digital image (a207) is a digital still image.

12. A method according to any one of the preceding claims 8 to 11, wherein: the digital image (a207) comprises video stream data.

13. A software product (131) comprising: means adapted to carry out the method steps of any one of claims 8 to 12 when executed in a processing unit.

14. An electronic device (110) comprising: a control unit (113), a digital camera (115), and a software product according to claim 13.

15. A system, a method, a software product (131), or an electronic device (110) according to any one of the preceding claims, wherein: the message (a203) received from the mobile network (100) has a different format than the message (a207) transmitted to the mobile network (a209).

16. A system, a method, a software product (131), or an electronic device (110) according to any one of the preceding claims, wherein: the generated message (a209) has the format of a multimedia message used in the Multimedia Messaging Service of the mobile network (100).

17. A system, a method, a software product (131), or an electronic device (110) according to any one of the preceding claims, wherein: the message (a203) received from the mobile network (100) has a) the format of a short message used in the Short Message Service of the mobile network; or b) the format of a paging message.
